# EUROPÄISCHE PATENTSCHRIFT

(11) **EP 2 847 052 B1**
(45) Veröffentlichungstag und Bekanntmachung des Hinweises auf die Patenterteilung: **28.10.2020**
(21) Anmeldenummer: 13719009.6
(22) Anmeldetag: 10.04.2013
(51) Int. Cl.: B60W 30/14

(54) **VERFAHREN ZUR ERMITTLUNG EINER GESCHWINDIGKEITSEMPFEHLUNG**
METHOD FOR DETERMINING A SPEED RECOMMENDATION
PROCÉDÉ POUR DÉTERMINER UNE RECOMMANDATION DE VITESSE

(30) Priorität: 09.05.2012 DE 102012104069
(43) Veröffentlichungstag der Anmeldung: 18.03.2015
(73) Patentinhaber: Continental Teves AG & Co. OHG, 60488 Frankfurt am Main (DE)
(72) Erfinder: STÄHLIN, Ulrich, 65760 Eschborn (DE)
(86) Internationale Anmeldenummer: PCT/DE2013/100128
(87) Internationale Veröffentlichungsnummer: WO 2013/167113

(56) Entgegenhaltungen:
- DE-A1- 10 101 651
- DE-A1- 10 101 651
- DE-A1- 19 757 063
- DE-A1- 19 757 063
- DE-A1- 19 938 266
- DE-A1-102005 049 458
- DE-A1-102005 049 458
- DE-A1-102008 023 470
- DE-A1-102008 047 143
- DE-A1-102009 021 476
- DE-A1-102010 050 805
- DE-A1-102010 050 805
- DE-A1-102011 116 741
- DE-C1- 19 950 156

## Beschreibung

Die Erfindung betrifft ein Verfahren zum Betrieb eines Assistenzsystems eines Fahrzeugs, wobei für einen aktuell befahrenen Streckenabschnitt eine Geschwindigkeitsempfehlung in Abhängigkeit einer oder mehrerer Informationen ermittelt wird.

Aus dem Stand der Technik sind verschiedene Assistenzsysteme für Fahrzeuge bekannt (auch als Fahrerassistenzsysteme bezeichnet) bei denen für einen aktuell befahrenen Streckenabschnitt eine Geschwindigkeitsempfehlung in Abhängigkeit einer oder mehrerer Informationen ermittelt wird. Die Ermittlung der Geschwindigkeitsempfehlung kann dabei beispielsweise zur reinen Ausgabe an den Fahrzeugführer ermittelt werden oder, bei entsprechender Ausgestaltung des Assistenzsystems, zur autonomen Regelung der Geschwindigkeit des Fahrzeugs in Abhängigkeit der ermittelten Geschwindigkeitsempfehlung. Ziele derartiger Assistenzsysteme sind beispielweise eine Harmonisierung des Verkehrsflusses, insbesondere bei dichtem Verkehr (Staufahrt, Stop-and-Go-Verkehr), eine Optimierung des Kraftstoffverbrauchs und/oder allgemein eine Entlastung des Fahrzeugführers, insbesondere durch Vorgabe einer optimierten Fahrstrategie. Die DE 199 38 266 A zeigt den Oberbegriff von Anspruch 1.

Die DE 10 2008 047 143 A1 zeigt ein Verfahren und eine Vorrichtung zur Ermittlung einer Fahrstrategie als Information für den Führer eines Kraftfahrzeugs, bei dem insbesondere lokale Informationen weiterer, insbesondere vorausfahrender Kraftfahrzeuge mittels einer Empfangseinrichtung erfasst und daraus für den Kraftfahrzeugführer abgeleitete Informationen bereitgestellt werden. Um eine Möglichkeit zu schaffen, den Verkehrsfluss zu verbessern und zugleich den Energieverbrauch ebenso wie die Reisezeiten und die Unfallgefahr zu senken, umfasst die Informationsbereitstellung zumindest eine Handlungsempfehlung für eine empfohlene Geschwindigkeit. Hierdurch wird dem Kraftfahrzeugführer eine individuelle Handlungsempfehlung für eine empfohlene Geschwindigkeit bereitgestellt. Die empfohlene Geschwindigkeit wird dem Fahrzeugführer beispielsweise auf einem Display visualisiert.

Die DE 10 2010 050 805 A1 offenbart ein Verkehrsflussberatungssystem umfassend eine Ortbestimmungseinrichtung zum Identifizieren einer Position eines gefahrenen Fahrzeugs. Eine Kommunikationseinrichtung tauscht Positionsdaten, Geschwindigkeitsdaten und Fahrtrichtungsdaten des Fahrzeugs mit entfernten Fahrzeugen aus. Ein Prozessor konstruiert eine Verkehrsflussrate auf mehreren Straßenspuren auf der Grundlage der Positionsdaten und der Geschwindigkeitsdaten. Eine Mensch-Maschine-Schnittstelle gibt einem Fahrer des gefahrenen Fahrzeugs die Verkehrsflussrate jeder der Straßenspuren an. Gemäß einer Ausführungsform erfolgt das Bereitstellen einer Verkehrsflussratenkenntnis für einen Fahrer eines Fahrzeugs auf der Grundlage von Daten einer globalen Positionsbestimmung, wie beispielsweise von dem globalen Positionsbestimmungssystem und von Daten von entfernten Fahrzeugen, wie beispielsweise Geschwindigkeit, Bremsstatus, Warnblinkleuchte oder Lenkaktivität. Die Daten werden drahtlos von dem entfernten Fahrzeug an das Host-Fahrzeug übermittelt, und aus den übermittelten Nachrichten können Spurniveauverkehrsflussraten konstruiert werden. Die Spurniveauverkehrsflussraten können lediglich aus den drahtlosen Übermittlungen von entfernten Fahrzeugen dargestellt werden oder können verwendet werden, um eine Digitalabbildungsdatenbankanzeige zu erweitern. Eine Beratungsinformation bezüglich dessen, auf welcher Spur gefahren werden soll, oder bezüglich Geschwindigkeitsänderungen (d.h. Geschwindigkeitsverringerung oder Beschleunigung, um der Geschwindigkeit der Zielspur zu entsprechen), die vor Spurwechseln empfohlen werden, kann dem Fahrer auf der Grundlage der Verkehrsflussraten und vorbestimmter Fahrparameter bereitgestellt werden.

Die DE 10 2009 048 285 A1 offenbart eine Anzeigeeinrichtung zum Anzeigen einer empfohlenen Geschwindigkeit eines Fahrzeugs. Die empfohlene Geschwindigkeit beruht hierbei auf einer Information, die in einem fahrzeuginternen Speicher gespeichert ist oder dem Fahrzeug von einem fahrzeugexternen Sender übermittelt wird oder über Umfeldsensorik wie Radar, Kamera, Lidar, Laserscanner, etc. erkannt wird. Beispielsweise wird die gewünschte oder empfohlene Geschwindigkeit bestimmt, indem Daten von einem Navigationssystem des Fahrzeugs und/oder einer digitalen Karte des Fahrzeugs verwendet werden. Alternativ oder zusätzlich hierzu können Informationen von externen Kommunikationseinheiten an das Fahrzeug übermittelt werden, beispielsweise von einer Infrastruktur oder einem benachbarten Fahrzeug. Insbesondere kann es sich bei der Infrastruktureinrichtung um einen Ampelphasenassistenten handeln. Gemäß einem Ausführungsbeispiel ist der Geschwindigkeitsanzeiger als Tachometer mit einer entsprechenden Tachonadel ausgeführt. Auch kann es sich bei dem Geschwindigkeitsanzeiger um ein sog. Head-up-Display oder eine balkenartige Geschwindigkeitsdarstellung handeln. Auch können mehrere solche Geschwindigkeitsanzeiger im Fahrzeug vorgesehen sein. Die Geschwindigkeitsanzeige kann weiterhin mit einer aktiven Geschwindigkeitssteuerung gekoppelt sein (z.B. Cruise Controle bzw. Adaptive Cruise Control (ACC)), welche dem Fahrer assistiert und ihm hilft, die empfohlene Geschwindigkeit einzustellen bzw. die das Fahrzeug autonom auf die empfohlene Geschwindigkeit regelt.

Die aus dem Stand der Technik bekannten Systemen, bei denen für einen aktuell befahrenen Streckenabschnitt eine Geschwindigkeitsempfehlung in Abhängigkeit einer oder mehrerer Informationen ermittelt wird, haben jedoch einen wesentlichen Nachteil. Unabhängig davon, wie und aus welchen Informationen die Geschwindigkeitsempfehlung ermittelt wird, sowie unabhängig davon, ob die ermittelte Geschwindigkeitsempfehlung dem Fahrzeugführer lediglich ausgegeben oder ob das Assistenzsystem zur autonomen Regelung der Fahrzeuggeschwindigkeit auf die Geschwindigkeitsempfehlung ausgebildet ist, kommt es vor, dass in bestimmten Situationen keine Geschwindigkeitsempfehlung ermittelbar ist bzw. dass vorübergehend oder zu einem bestimmten Zeitpunkt noch keine Geschwindigkeitsempfehlung ermittelt wurde. Gründe hierfür können beispielsweise das Fehlen von erforderlichen Informationen sein, eine fehlerhafte oder widersprüchliche Informationserfassung, defekte Sensoreinrichtungen, etc. Dies kann bei den bekannten Systemen zu verschiedenen Problemen führen. Dem Fahrzeugführer kann beispielsweise eine falsche Geschwindigkeitsempfehlung ausgegeben werden oder eine für die aktuelle Fahrsituation bzw. für den aktuell befahrenden Streckenabschnitt unpassende Geschwindigkeitsempfehlung. Dies führt beim Fahrzeugführer zu einem Akzeptanzverlust für derartige Assistenzsysteme. Im schlimmsten Fall können falsche oder unpassende Geschwindigkeitsempfehlungen den Fahrer verwirren, vom Verkehrsgeschehen ablenken oder der Fahrzeugführer kann ungewollt gegen geltende Verkehrsregeln verstoßen (z.B. Überschreitung von Geschwindigkeitsbeschränkungen). Ist das Assistenzsystem zur autonomen Regelung der Geschwindigkeit des Fahrzeugs in Abhängigkeit entsprechend der Geschwindigkeitsempfehlung ausgebildet, können mitunter kritische Fahrsituationen auftreten, beispielsweise weil das System unerwartet den Fahrzeugführer bei fehlender Geschwindigkeitsempfehlung zur Übernahme der Geschwindigkeitsregelung auffordert oder weil das System auf eine unpassende Geschwindigkeit regelt.

Der Erfindung liegt demnach die Aufgabe zugrunde, ein Verfahren zum Betreiben eines Assistenzsystems eines Fahrzeugs anzugeben, bei dem für einen aktuell befahrenen Streckenabschnitt eine Geschwindigkeitsempfehlung in Abhängigkeit einer oder mehrerer Informationen ermittelt und welches die ermittelte Geschwindigkeitsempfehlung an einen Fahrzeugführer des Fahrzeugs ausgibt und/oder die Geschwindigkeit des Fahrzeugs autonom auf die ermittelte Geschwindigkeitsempfehlung regelt, wobei auch in Situationen, wenn und/oder solange keine Geschwindigkeitsempfehlung ermittelt und/oder ermittelbar ist, ein sicherer und zuverlässiger Betrieb des Assistenzsystems gewährleistet ist. Diese Aufgabe wird durch ein Verfahren mit den Merkmalen nach Anspruch 1 sowie durch ein Assistenzsystem mit den Merkmalen nach Anspruch 6 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, dass in Situationen, wenn und/oder solange keine Geschwindigkeitsempfehlung ermittelt und/oder ermittelbar ist, eine vorläufige Geschwindigkeitsempfehlung festgelegt wird, und wenn und/oder solange keine Geschwindigkeitsempfehlung ermittelt und/oder ermittelbar ist, die vorläufige Geschwindigkeitsempfehlung an den Fahrzeugführer des Fahrzeugs ausgegeben wird und/oder die Geschwindigkeit des Fahrzeugs autonom auf die vorläufige Geschwindigkeitsempfehlung geregelt wird.

Das erfindungsgemäße Verfahren dient zum Betrieb eines Assistenzsystems eines Fahrzeugs, bei dem für einen aktuell befahrenen Streckenabschnitt eine Geschwindigkeitsempfehlung in Abhängigkeit einer oder mehrerer Informationen ermittelt wird. Das Assistenzsystem kann weiterhin derart ausgebildet sein, dass die ermittelte Geschwindigkeitsempfehlung an einen Fahrzeugführer des Fahrzeugs ausgegeben wird und/oder dass die Geschwindigkeit des Fahrzeugs autonom auf die ermittelte Geschwindigkeitsempfehlung geregelt wird. Erfindungsgemäß wird, insbesondere in Situationen, wenn und/oder solange keine Geschwindigkeitsempfehlung ermittelt und/oder ermittelbar ist, eine vorläufige Geschwindigkeitsempfehlung festgelegt. Weiterhin wird im Rahmen des erfindungsgemäßen Verfahrens, insbesondere in Situationen, wenn und/oder solange keine Geschwindigkeitsempfehlung ermittelt und/oder ermittelbar ist, die vorläufige Geschwindigkeitsempfehlung an den Fahrzeugführer des Fahrzeugs ausgegeben oder die Geschwindigkeit des Fahrzeugs autonom auf die vorläufige Geschwindigkeitsempfehlung geregelt.

Bei dem Assistenzsystem, bei dem das erfindungsgemäße Verfahren zum Einsatz kommt, kann es sich grundsätzlich um jedes bekannte System handeln, bei dem für einen aktuell befahrenen Streckenabschnitt eine Geschwindigkeitsempfehlung in Abhängigkeit einer oder mehrerer Informationen ermittelt wird, beispielsweise um eines der einleitend genannten und aus dem Stand der Technik bekannten Systeme.

Bei dem aktuell befahrenen Streckenabschnitt, handelt es sich beispielsweise um den Verkehrsweg bzw. die Straße, auf dem bzw. auf der sich das Fahrzeug kurz vor oder während des Zeitpunkts der Ermittlung der Geschwindigkeitsempfehlung befindet. Bei dem aktuellen befahrenen Streckenabschnitt kann es sich insbesondere auch um einen bestimmte Fahrspur eines Verkehrsweges bzw. einer Straße handeln. Bei dem aktuell befahrenen Streckenabschnitt handelt es sich vorzugsweise um einen Straßenabschnitt bzw. um eine zusammenhängende Wegstrecke, die das Fahrzeug aktuell befährt.

Bei der Geschwindigkeitsempfehlung kann es sich um eine Geschwindigkeit handeln, die für den aktuell befahrenen Streckenabschnitt aus Gründen der Verkehrsflussharmonisierung, zur Steigerung der Energieeffizienz und/oder des empfundenen Fahrtkomforts und/oder aus Gründen der Verkehrssicherheit anderen Geschwindigkeiten, beispielsweise der Mindest-, Höchst- und/oder Richtgeschwindigkeit vorzuziehen ist.

Bei den Informationen, anhand derer die Geschwindigkeitsempfehlung ermittelt wird, kann es sich um beliebig viele und unterschiedliche Informationen handeln. Dazu gehören beispielsweise Informationen, die in fahrzeuginternen Speichern gespeichert sind und/oder von fahrzeuginternen Messeinrichtungen gewonnen werden. Die Informationen können dem Assistenzsystem weiterhin von fahrzeugexternen Einrichtungen bzw. Sendern (Infrastruktureinrichtung, andere Fahrzeug, Satelliten, etc.) z.B. über Funk oder GPS, übermittelt werden. Die Informationen können alternativ oder zusätzlich aus digitalen Karten gewonnen und/oder mittels Umfeldsensorik (Kamera, Radar, Lidar, et.) erfasst werden. Bevorzugt erfolgt die Ermittlung der Geschwindigkeitsempfehlung durch eine Auswerteeinheit des Assistenzsystems, in der mehrere Informationen zusammenfließen und die aus den Informationen eine Geschwindigkeitsempfehlung ableitet. Beispielsweise ist es denkbar, dass die Auswerteeinheit die Geschwindigkeitsempfehlung aus Informationen über, mittels einer Umfeldsensorik erkannter und/oder aus digitalen Karten gewonnener, Verkehrszeicheninformationen sowie aus Informationen über Geschwindigkeiten von Fahrzeugen auf der eigenen und/oder auf benachbarten Fahrspuren ermittelt.

Unter einer Situation, wenn und/oder solange keine Geschwindigkeitsempfehlung ermittelt und/oder ermittelbar ist, kann es sich um Situationen handeln, in denen nicht alle Informationen oder nicht ausreichend Informationen, die für die Ermittlung der Geschwindigkeitsempfehlung erforderlich sind, d.h. die das Assistenzsystem für die Ermittlung benötigt, vorliegen bzw. solange diese nicht erfasst wurden. Eine Geschwindigkeitsempfehlung kann beispielsweise nicht ermittelbar sein, wenn eine oder mehrere Informationen dauerhaft nicht gewonnen werden können, beispielsweise wenn eines oder mehrere Informationsquellen (z.B. Umfelderfassungssensoren) defekt sind. Somit handelt es sich im Rahmen des erfindungsgemäßen Verfahrens bei den Situationen, wenn und/oder solange keine Geschwindigkeitsempfehlung ermittelt und/oder ermittelbar ist, insbesondere um Situationen, in denen wenigstens eine Information, die das Assistenzsystem für die Ermittlung der Geschwindigkeitsempfehlung mindestens benötigt, nicht vorliegt.

Bei der vorläufigen Geschwindigkeitsempfehlung handelt es sich insbesondere um eine oder mehrere Geschwindigkeiten, die beispielsweise in einem Speicher des Assistenzsystems hinterlegt sind, und die für den Fall, wenn und/oder solange keine Geschwindigkeitsempfehlung ermittelt und/oder ermittelbar ist, anstelle der ermittelten Geschwindigkeitsempfehlung an den Fahrzeugführer ausgegeben werden bzw. auf die die Geschwindigkeit des Fahrzeugs geregelt wird. Bei der vorläufigen Geschwindigkeitsempfehlung handelt es sich somit insbesondere um einen Geschwindigkeitswert, der ersatzweise zur ermittelten Geschwindigkeitsempfehlung ausgegeben wird, wenn diese nicht ermittelbar ist bzw. noch nicht ermittelt wurde.

Bei dem erfindungsgemäßen Verfahren handelt es sich somit insbesondere um eine Ausweichstrategie für gattungsgemäße Assistenzsysteme, falls Situationen auftreten, in denen die Ermittlung von Geschwindigkeitsempfehlung erschwert und/oder nicht möglich ist, und es löst somit die eingangs beschriebenen Nachteile der aus dem Stand der Technik bekannten Systeme.

Gemäß einer bevorzugten Ausgestaltung des erfindungsgemäßen Verfahrens handelt es sich bei der vorläufigen Geschwindigkeitsempfehlung um die Höchstgeschwindigkeit, Richtgeschwindigkeit oder Mindestgeschwindigkeit für den aktuell befahrenen Streckenabschnitt. Ist es bei dem Assistenzsystem, bei welchem das erfindungsgemäße Verfahren zum Einsatz kommt, beispielsweise erforderlich, dass für die Ermittlung der Geschwindigkeitsempfehlung, neben einer Information über die Höchst-, Mindest-, und/oder Richtgeschwindigkeit auf dem aktuell befahrenen Streckenabschnitt, eine oder mehrere weitere Informationen vorliegen, beispielsweise eine Information über eine Geschwindigkeit eines oder mehrerer anderer Verkehrsteilnehmer (beispielsweise nachfolgende und/oder vorausfahrende Fahrzeuge), kann im Rahmen des erfindungsgemäßen Verfahrens, solange die eine oder mehreren weiteren Informationen nicht ermittelt wurden, die Mindest-, Höchst- und/oder Richtgeschwindigkeit als vorläufige Geschwindigkeitsempfehlung festgelegt werden.

Gemäß einer weiteren bevorzugten Ausgestaltung des erfindungsgemäßen Verfahrens handelt es sich bei der vorläufigen Geschwindigkeitsempfehlung, um die Geschwindigkeit eines vorausfahrenden Fahrzeugs. Ist es bei dem Assistenzsystem, bei welchem das erfindungsgemäße Verfahren zum Einsatz kommt, beispielsweise erforderlich, dass für die Ermittlung der Geschwindigkeitsempfehlung, neben einer Information über eine Geschwindigkeit eines vorausfahrenden Fahrzeugs, zusätzlich eine oder mehrere weitere Informationen vorliegen, beispielsweise Informationen über die Höchst-, Mindest-, und/oder Richtgeschwindigkeit auf dem aktuell befahrenen Streckenabschnitt, kann im Rahmen des erfindungsgemäßen Verfahrens, solange die eine oder mehreren weiteren Informationen ermittelt wurden, die Geschwindigkeit des vorausfahrenden Fahrzeugs als vorläufige Geschwindigkeitsempfehlung festgelegt werden.

Gemäß einer besonderen Ausgestaltung des erfindungsgemäßen Verfahrens wird die vorläufige Geschwindigkeitsempfehlung in Abhängigkeit von Geschwindigkeiten eines oder mehrerer vorausfahrender und/oder nachfolgender Fahrzeuge festgelegt. Beispielsweise kann, wenn mittels Umfeldsensoren festgestellt wird, dass vor dem Fahrzeug viel Platz vorhanden ist und dass sich hinter dem Fahrzeug andere Fahrzeuge aufstauen, dem Fahrzeugführer eine höhere Geschwindigkeit, als die aktuell gefahrene Geschwindigkeit, als vorläufige Geschwindigkeitsempfehlung ausgegeben werden, z.B. die Richtgeschwindigkeit für den aktuell befahrenen Streckenabschnitt.

Gemäß einer weiteren besonderen Ausgestaltung des erfindungsgemäßen Verfahrens wird die vorläufige Geschwindigkeitsempfehlung in Abhängigkeit von überholenden Fahrzeugen festgelegt, d.h. in Abhängigkeit von Fahrzeugen, die das Fahrzeug überholen. Insbesondere dann, wenn viele andere Fahrzeuge das Fahrzeug überholen, d.h. wenn erkannt wird, dass viele nachfolgende Fahrzeug von der eigenen (z.B. die rechte) Fahrspur auf die linke Fahrspur wechseln, überholen und dann vor dem Fahrzeug wieder auf die eigene (rechte) Fahrspur wechseln, kann eine höhere als die aktuelle Geschwindigkeit als vorläufige Geschwindigkeitsempfehlung ausgegeben werden, z.B. die Richtgeschwindigkeit.

Im Rahmen des erfindungsgemäßen Verfahrens kann insbesondere ermittelt werden, ob das Fahrzeug für die eigene bzw. aktuell befahrene Fahrspur zu schnell oder zu langsam ist. Dass das Fahrzeug für die eigene Fahrspur zu langsam ist kann beispielsweise erkannt werden wenn:
- wenn viele andere Fahrzeuge das eigene Fahrzeug überholen, d.h. beispielsweise von einer rechten, insbesondere der aktuell befahrenen Fahrspur, auf eine linke Fahrspur wechseln, insbesondere auf eine Überholspur oder auf eine Spur des Gegenverkehrs, daraufhin das eigene Fahrzeug überholen und anschließend wieder von der linken auf die rechte Fahrspur wechseln; und/oder
- wenn erkannt wird, dass auf der Fahrspur vor dem eigenen Fahrzeug viel Platz bzw. ein großer Abstand zu vorausfahrenden Fahrzeugen vorhanden ist und sich hinter dem eigenen Fahrzeug viele andere Fahrzeuge aufstauen.

Die Information, dass das Fahrzeug für die eigene bzw. aktuell befahrene Fahrspur zu schnell oder zu langsam ist, kann dem Fahrzeugführer allein und/oder zusammen mit der Geschwindigkeitsempfehlung bzw. mit der vorläufigen Geschwindigkeitsempfehlung angezeigt werden. Weiterhin kann dem Fahrzeugführer in Abhängigkeit der Information eine Spurwechselempfehlung ausgegeben oder es kann das Fahrzeug autonom auf eine andere Fahrspur geführt werden. Beispielsweise kann das Fahrzeug, insbesondere wenn das Fahrzeug mit einem System zur autonomen Querreglung des Fahrzeugs ausgebildet ist, von einer Überholspur auf eine weiter rechts befindliche Fahrspur bewegt werden, wenn erkannt wird, dass das Fahrzeug für die Überholspur zu langsam ist.

Gemäß einer vorteilhaften Ausgestaltung des erfindungsgemäßen Verfahrens handelt es sich bei der vorläufigen Geschwindigkeitsempfehlung um eine Durchschnittsgeschwindigkeit, insbesondere für die aktuell befahrene Fahrspur. Ist es bei dem Assistenzsystem, bei welchem das erfindungsgemäße Verfahren zum Einsatz kommt, beispielsweise erforderlich, dass für die Ermittlung der Geschwindigkeitsempfehlung, neben einer Information über die Durchschnittsgeschwindigkeit auf der aktuell befahrenen Fahrspur (z.B. ermittelt aus den Geschwindigkeiten anderer Verkehrsteilnehmer auf der entsprechenden Fahrspur), zusätzlich eine oder mehrere weitere Informationen vorliegen, beispielsweise über die Höchst-, Mindest-, und/oder Richtgeschwindigkeit auf dem aktuell befahrenen Streckenabschnitt, kann im Rahmen des erfindungsgemäßen Verfahrens, solange die eine oder die mehreren weiteren Informationen ermittelt wurden, die Durchschnittsgeschwindigkeit auf dem aktuell befahrenen Streckenabschnitt bzw. auf der aktuell befahrenen Fahrspur als vorläufige Geschwindigkeitsempfehlung festgelegt werden.

Erfindungsgemäss werden, insbesondere bei mehrspurigen Straßen, z.B. auf Autobahnen, für mehrere Fahrspuren, z.B. für die vom Fahrzeug aktuell befahrene Fahrspur und für die Nachbarfahrspuren, vorläufige Geschwindigkeitsempfehlungen festgelegt. Die vorläufigen Geschwindigkeitsempfehlungen können dabei jeweils gemäß einer der vorangehend beschrieben Ausgestaltungen des Verfahrens festgelegt werden, beispielsweise anhand der erfassten Geschwindigkeiten von Fahrzeugen auf der jeweiligen Fahrspur bzw. anhand von ermittelten Durchschnittsgeschwindigkeiten für die Fahrspuren. Erfindungsgemäß kann weiterhin in Abhängigkeit der Geschwindigkeit des Fahrzeugs, d.h. der aktuellen Geschwindigkeit, und der für die mehreren Fahrspuren ermittelten vorläufigen Geschwindigkeitsempfehlungen eine Spurempfehlung an den Fahrzeugführer ausgegeben werden, beispielsweise eine Empfehlung, welche Fahrspur zur aktuellen Geschwindigkeit am besten passt. Die Empfehlung wird insbesondere anhand eines Vergleichs der aktuellen Geschwindigkeit und der vorläufigen Geschwindigkeitsempfehlungen ermittelt, d.h. welche vorläufige Geschwindigkeitsempfehlung der aktuellen Geschwindigkeit des Fahrzeugs am nächsten kommt. Alternativ oder zusätzlich zur Ausgabe der Spurempfehlung kann im Rahmen des erfindungsgemäßen Verfahrens, insbesondere wenn das Fahrzeug mit einem System zur autonomen Querregelung des Fahrzeugs ausgebildet ist, das Fahrzeug autonom auf die Fahrspur entsprechend der Spurempfehlung bewegt werden.

Gemäß einer weiteren besonderen Ausgestaltung des erfindungsgemäßen Verfahrens wird eine Spurwechselempfehlung als Spurempfehlung ausgegeben, wenn die Geschwindigkeit des Fahrzeugs einer vorläufigen Geschwindigkeitsempfehlung einer anderen Fahrspur näher kommt, als der vorläufigen Geschwindigkeitsempfehlung der aktuell befahrenen Fahrspur. In diesem Fall wird dem Fahrzeugführer mittels der Spurwechselempfehlung vorzugsweise empfohlen auf die entsprechende Fahrspur zu wechseln. Alternativ oder zusätzlich zur Ausgabe der Spurwechselempfehlung kann im Rahmen des erfindungsgemäßen Verfahrens, insbesondere wenn das Fahrzeug mit einem System zur autonomen Querregelung des Fahrzeugs ausgebildet ist, das Fahrzeug autonom auf die Fahrspur entsprechend der Spurwechselempfehlung bewegt werden.

Das erfindungsgemäße Assistenzsystem kommt bevorzugt in einem Fahrzeug zum Einsatz und ist derart ausgebildet, dass für einen aktuell befahrenen Streckenabschnitt eine Geschwindigkeitsempfehlung in Abhängigkeit einer oder mehrerer Informationen ermittelt wird, und dass die ermittelte Geschwindigkeitsempfehlung an einen Fahrzeugführer des Fahrzeugs ausgegeben und/oder die Geschwindigkeit des Fahrzeugs autonom auf die ermittelte Geschwindigkeitsempfehlung geregelt wird. Zusätzlich kann, falls die aktuelle Geschwindigkeit zur Geschwindigkeitsempfehlung einer Nachbarfahrspur passt, ein Spurwechsel auf die besser passende Nachbarfahrspur empfohlen werden bzw. dieser Spurwechsel automatisch durchgeführt werden. Das erfindungsgemäße Assistenzsystem ist weiterhin derart ausgebildet, dass in Situationen, wenn und/oder solange keine Geschwindigkeitsempfehlung ermittelt und/oder ermittelbar ist, eine vorläufige Geschwindigkeitsempfehlung festgelegt wird und, wenn und/oder solange keine Geschwindigkeitsempfehlung ermittelt und/oder ermittelbar ist, die vorläufige Geschwindigkeitsempfehlung an den Fahrzeugführer des Fahrzeugs ausgegeben und/oder die Geschwindigkeit des Fahrzeugs autonom auf die vorläufige Geschwindigkeitsempfehlung geregelt wird.

Um das erfindungsgemäße Verfahren und das erfindungsgemäße Assistenzsystem weiter zu verbessern, insbesondere um die Akzeptanz einer Geschwindigkeitsempfehlung zu gewährleisten, können das erfindungsgemäße Verfahren und/oder das erfindungsgemäße Assistenzsystem, um eines oder mehrere der folgenden Merkmale weitergebildet sein:
- Es wird eine Information angezeigt, wie viel Kraftstoff bzw. Energie durch die angepasste Geschwindigkeit (Anpassung der Geschwindigkeit an die Geschwindigkeitsempfehlung) eingespart werden kann. Eine Kraftstoff- bzw. Energieersparnis ergibt sich insbesondere aus einem insgesamt geringeren Beschleunigungsbedarf bzw. aus selteneren Brems- und Beschleunigungsvorgängen.
- Es wird zusätzlich oder alternativ zur Geschwindigkeitsempfehlung der Geschwindigkeitsunterschied zur Geschwindigkeitsempfehlung (Unterschied zwischen der aktuellen Geschwindigkeit und der Geschwindigkeitsempfehlung) angezeigt. Befindet sich das Fahrzeug in einem optimalen Geschwindigkeitsbereich (bestimmter Geschwindigkeitsbereich um die Geschwindigkeitsempfehlung, z.B. +/- 10 km/h), kann dies entsprechend angezeigt werden, z.B. grafisch positiv hervorgehoben.
- Insbesondere bei bereits stockendem Verkehr bzw. Stau, und wenn ermittelten wird, dass das Fahrzeug bzw. der Fahrzeugführer mehrfach an demselben Fahrzeug vorbeifährt (überholt), kann ermittelt und dem Fahrzeugführer angezeigt werden, dass ein (ständiges) Spurwechseln zu keinem Vorteil führt. Technisch kann dies beispielsweise derart umgesetzt werden, dass bei erkanntem Stau (z.B. wenn Fahrzeugdichte über einem gewissen Schwellwert und/oder Geschwindigkeit unter einem von der Straßenklasse abhängigen Schwellwert liegt) Silhouetten von Fahrzeugen und/oder andere Merkmale von Fahrzeugen (Nummernschild, etc.) gelernt (gespeichert) werden, insbesondere von (erstmalig) überholten Fahrzeugen, und bei erneutem Erkennen, d.h. wenn anhand der gelernten Merkmale erkannt wird, dass dasselbe Fahrzeug erneut überholt wird, ermittelt und dem Fahrzeugführer angezeigt wird, dass das Spurwechseln zu keinem Vorteil führt.

## Patentansprüche

1. **Verfahren zum Betrieb eines Assistenzsystems eines Fahrzeugs,**
bei dem für einen aktuell befahrenen Streckenabschnitt eine Geschwindigkeitsempfehlung in Abhängigkeit einer oder mehrerer Informationen ermittelt wird und
- bei dem die ermittelte Geschwindigkeitsempfehlung an einen Fahrzeugführer des Fahrzeugs ausgegeben wird und/oder
- das die Geschwindigkeit des Fahrzeugs autonom auf die ermittelte Geschwindigkeitsempfehlung regelt,
wobei,
wenn und/oder solange keine Geschwindigkeitsempfehlung ermittelt und/oder ermittelbar ist,
- eine vorläufige Geschwindigkeitsempfehlung festgelegt wird, wobei
es sich bei der vorläufigen Geschwindigkeitsempfehlung um einen Geschwindigkeitswert handelt, der ersatzweise zur ermittelten Geschwindigkeitsempfehlung ausgegeben wird, und wobei
- die vorläufige Geschwindigkeitsempfehlung an den Fahrzeugführer des Fahrzeugs ausgegeben und/oder
- die Geschwindigkeit des Fahrzeugs autonom auf die vorläufige Geschwindigkeitsempfehlung geregelt wird, **dadurch gekennzeichnet, dass**
- für mehrere Fahrspuren vorläufige Geschwindigkeitsempfehlungen festgelegt werden und
- in Abhängigkeit der aktuellen Geschwindigkeit des Fahrzeugs und der für die mehreren Fahrspuren festgelegten vorläufigen Geschwindigkeitsempfehlungen - eine Spurempfehlung an den Fahrzeugführer ausgegeben oder
- das Fahrzeug autonom auf die der Spurempfehlung entsprechenden Fahrspur bewegt wird,
wobei eine Spurwechselempfehlung als Spurempfehlung ausgegeben wird, wenn die aktuelle Geschwindigkeit des Fahrzeugs einer vorläufigen Geschwindigkeitsempfehlung einer anderen Fahrspur näher kommt, als der Geschwindigkeitsempfehlung der aktuell befahrenen Fahrspur.

2. Verfahren nach einem der vorangegangenen Ansprüche, **dadurch gekennzeichnet, dass** die vorläufigen Geschwindigkeitsempfehlungen in Abhängigkeit von Geschwindigkeiten eines oder mehrerer vorausfahrender und/oder nachfolgender Fahrzeuge festgelegt wird.

3. Verfahren nach einem der vorangegangenen Ansprüche, **dadurch gekennzeichnet, dass** die vorläufigen Geschwindigkeitsempfehlungen in Abhängigkeit von überholenden Fahrzeugen festgelegt werden.

4. Verfahren nach einem der vorangegangenen Ansprüche, **dadurch gekennzeichnet, dass** es sich bei den vorläufigen Geschwindigkeitsempfehlungen um Durchschnittsgeschwindigkeiten der mehreren Fahrspuren handelt.

5. Verfahren nach einem der vorangegangenen Ansprüche,
**dadurch gekennzeichnet, dass**
dem Fahrzeugführer wenigstens eine der folgenden Informationen angezeigt wird:
- Kraftstoffeinsparung bei Einhaltung der Geschwindigkeitsempfehlung
- Geschwindigkeitsunterschied zwischen der aktuellen Geschwindigkeit und der Geschwindigkeitsempfehlung
- Geschwindigkeitsunterschied zwischen der aktuellen Geschwindigkeit und einem optimalen Geschwindigkeitsbereich
- Information, dass ein Spurwechseln keinen Vorteil bringt

6. **Assistenzsystems für ein Fahrzeug,**
bei dem für einen aktuell befahrenen Streckenabschnitt eine Geschwindigkeitsempfehlung in Abhängigkeit einer oder mehrerer Informationen ermittelt wird,
- bei dem die ermittelte Geschwindigkeitsempfehlung an einen Fahrzeugführer des Fahrzeugs ausgegeben wird und/oder
- das die Geschwindigkeit des Fahrzeugs autonom auf die ermittelte Geschwindigkeitsempfehlung regelt, und
das gemäß einem Verfahren nach einem der vorangegangenen Ansprüche betrieben wird.

7. **Fahrzeug** mit einem Assistenzsystem gemäß Anspruch 6.

## Claims

1. A method for operating an assistance system of a vehicle,
in which a speed recommendation for a route section currently being driven along is determined as a function of one or more information items, and
- in which the determined speed recommendation is output to a vehicle driver of the vehicle, and/or
- said method adjusts the speed of the vehicle autonomously to the determined speed recommendation,
wherein,
if and/or for as long as no speed recommendation is determined and/or can be determined,
- a provisional speed recommendation is specified, wherein
the provisional speed recommendation is a speed value which is output as an alternative to the determined speed recommendation, and wherein
- the provisional speed recommendation is output to the vehicle driver of the vehicle, and/or
- the speed of the vehicle is autonomously adjusted to the provisional speed recommendation, **characterized in that**
- provisional speed recommendations are specified for multiple lanes, and
- as a function of the current speed of the vehicle and the specified provisional speed recommendations for the multiple lanes,
- a lane recommendation is output to the vehicle driver, or
- the vehicle is autonomously moved to the lane corresponding to the lane recommendation,
wherein a lane change recommendation is output as a lane recommendation, if the current speed of the vehicle is closer to a provisional speed recommendation of another lane than the speed recommendation of the lane currently being driven along.

2. The method according to any one of the preceding claims, **characterized in that** the provisional speed recommendations are specified as a function of speeds of one of more vehicles driving ahead and/or behind.

3. The method according to any one of the preceding claims, **characterized in that** the provisional speed recommendations are specified as a function of overtaking vehicles.

4. The method according to any one of the preceding claims, **characterized in that** the provisional speed recommendations are average speeds of the multiple lanes.

5. The method according to any one of the preceding claims, **characterized in that** at least one of the following information items is displayed to the vehicle driver:
- fuel saving if the speed recommendation is observed,
- difference in speed between the current speed and the speed recommendation,
- difference in speed between the current speed and an optimum speed range,
- information that changing lanes will not result in any advantage.

6. An assistance system for a vehicle,
in which a speed recommendation for a route section currently being driven along is determined as a function of one or more information items,
- in which the determined speed recommendation is output to a vehicle driver of the vehicle, and/or
- said assistance system adjusts the speed of the vehicle autonomously to the determined speed recommendation, and is operated according to a method according to any one of the preceding claims.

7. A vehicle having an assistance system according to Claim 6.

## Revendications

1. **Procédé pour le fonctionnement d'un système d'assistance d'un véhicule,**
par lequel une recommandation de vitesse est déterminée en fonction d'une ou de plusieurs informations, pour un tronçon emprunté actuellement, et
- par lequel la recommandation de vitesse déterminée est sortie à l'attention d'un conducteur du véhicule et/ou
- lequel règle la vitesse du véhicule de façon autonome sur la recommandation de vitesse déterminée,
lorsque, et/ou tant que, aucune recommandation de vitesse n'est déterminée et/ou déterminable,
- une recommandation de vitesse provisoire étant fixée,
la recommandation de vitesse provisoire étant une valeur de vitesse qui est sortie en remplacement de la recommandation de vitesse déterminée, et
- la recommandation de vitesse provisoire étant sortie à l'attention du conducteur du véhicule et/ou
- la vitesse du véhicule de façon étant réglée de façon autonome sur la recommandation de vitesse provisoire,
**caractérisé en ce que**
- des recommandations de vitesse provisoires sont fixées pour plusieurs voies de circulation et
- en fonction de la vitesse actuelle du véhicule et des recommandations de vitesse provisoires fixées pour les plusieurs voies de circulation - une recommandation de voie est sortie à l'attention du conducteur ou - le véhicule est déplacé de façon autonome jusqu'à la voie de circulation correspondant à la recommandation de voie,
un changement de recommandation de voie étant sorti comme recommandation de voie lorsque la vitesse actuelle du véhicule se rapproche plus d'une recommandation de vitesse provisoire d'une autre voie de circulation que de la recommandation de vitesse de la voie de circulation empruntée actuellement.

2. Procédé selon l'une quelconque des revendications précédentes, **caractérisé en ce que** les recommandations de vitesse provisoires sont fixées en fonction de vitesses d'un ou de plusieurs véhicules précédents et/ou suivants.

3. Procédé selon l'une quelconque des revendications précédentes, **caractérisé en ce que** les recommandations de vitesse provisoires sont fixées en fonction de véhicules en dépassement.

4. Procédé selon l'une quelconque des revendications précédentes, **caractérisé en ce que** les recommandations de vitesse provisoires sont des vitesses moyennes des plusieurs voies de circulation.

5. Procédé selon l'une quelconque des revendications précédentes, **caractérisé en ce qu'** au moins l'une des informations suivantes est affichée à l'attention du conducteur :
- économie de carburant en cas de respect de la recommandation de vitesse
- différence de vitesse entre la vitesse actuelle et la recommandation de vitesse
- différence de vitesse entre la vitesse actuelle et une plage de vitesse optimale
- information qu'un changement de voie n'apporte aucun avantage

6. **Système d'assistance pour un véhicule,**
par lequel une recommandation de vitesse est déterminée en fonction d'une ou de plusieurs informations, pour un tronçon emprunté actuellement,
- par lequel la recommandation de vitesse déterminée est sortie à l'attention d'un conducteur du véhicule et/ou
- lequel règle la vitesse du véhicule de façon autonome sur la recommandation de vitesse déterminée, et lequel est exécuté conformément à un procédé selon l'une des revendications précédentes.

7. **Véhicule** avec un système d'assistance selon la revendication 6.
